# EUROPÄISCHE PATENTSCHRIFT

(11) **EP 2 705 059 B1**
(45) Veröffentlichungstag und Bekanntmachung des Hinweises auf die Patenterteilung: **20.02.2019**
(21) Anmeldenummer: 12708299.8
(22) Anmeldetag: 07.03.2012
(51) Int. Cl.: C08F 8/34, H01M 10/39, H01M 10/052, H01M 4/1399, H01M 4/137, H01M 4/04, H01M 4/60

(54) **POLYACRYLNITRIL-SCHWEFEL-KOMPOSITWERKSTOFF**
POLYACRYLONITRILE-SULPHUR COMPOSITE MATERIAL
MATÉRIAU COMPOSITE DE POLYACRYLONITRILE-SOUFRE

(30) Priorität: 02.05.2011 DE 102011075056
(43) Veröffentlichungstag der Anmeldung: 12.03.2014
(73) Patentinhaber: Robert Bosch GmbH, 70442 Stuttgart (DE)
(72) Erfinder: GRIMMINGER, Jens, 89250 Senden (DE); FANOUS, Jean, 70374 Stuttgart (DE); TENZER, Martin, 71701 Schwieberdingen (DE); WEGNER, Marcus, 71229 Leonberg (DE)
(86) Internationale Anmeldenummer: PCT/EP2012/053855
(87) Internationale Veröffentlichungsnummer: WO 2012/150061

(56) Entgegenhaltungen:
- WANG J ET AL: "SULFUR COMPOSITE CATHODE MATERIALS FOR RECHARGEABLE LITHIUM BATTERIES", ADVANCED FUNCTIONAL MATERIALS, WILEY - V C H VERLAG GMBH & CO. KGAA, DE, Bd. 13, Nr. 6, 1. Juni 2003 (2003-06-01), Seiten 487-492, XP001162512, ISSN: 1616-301X, DOI: 10.1002/ADFM.200304284 in der Anmeldung erwähnt
- YU X-G ET AL: "Lithium storage in conductive sulfur-containing polymers", JOURNAL OF ELECTROANALYTICAL CHEMISTRY AND INTERFACIALELECTRO CHEMISTRY, ELSEVIER, AMSTERDAM, NL, Bd. 573, Nr. 1, 15. November 2004 (2004-11-15), Seiten 121-128, XP004607085, ISSN: 0022-0728, DOI: 10.1016/J.JELECHEM.2004.07.004 in der Anmeldung erwähnt

## Beschreibung

Die vorliegende Erfindung betrifft ein Verfahren zur Herstellung eines Polyacrylnitril-Schwefel-Kompositwerkstoffs, einen Polyacrylnitril-Schwefel-Kompositwerkstoff, ein Kathodenmaterial, eine Alkali-Schwefel-Zelle - beziehungsweise -Batterie sowie einen Energiespeicher.

### Stand der Technik

Um Batterien mit einer deutlich größeren Energiedichte herzustellen wird derzeit an der Lithium-Schwefel-Batterietechnologie (kurz: Li/S) geforscht. Insofern die Kathode einer Lithium-Schwefel-Zelle vollständig aus elementarem Schwefel bestünde, könnte theoretisch ein Energieinhalt über 1.000 Wh/kg erzielt werden. Elementarer Schwefel ist jedoch weder ionisch noch elektrisch leitfähig, so dass Additive zur Kathode hinzugegeben werden müssen, die den theoretischen Wert deutlich senken. Zudem wird elementarer Schwefel herkömmlicherweise bei der Entladung einer Lithium-Schwefel-Zelle zu löslichen Polysulfide Sₓ²⁻ reduziert. Diese können in Bereiche, beispielsweise den Anodenbereich, diffundieren, in denen sie an der elektrochemischen Reaktion der nachfolgenden Lade/Entladezyklen nicht mehr teilnehmen können. Zudem können im Elektrolyten Polysulfide gelöst sein, welche nicht weiter reduziert werden können. In der Praxis ist daher derzeit die Schwefelausnutzung und damit die Energiedichte von Lithium-Schwefel-Zellen deutlich niedriger und wird derzeit zwischen 400 Wh/kg und 600 Wh/kg eingeschätzt.

Es existieren verschiedene Konzepte zur Steigerung der Schwefelausnutzung. Nazar et al. beschreiben in Nature Materials, Vol. 8, June 2009, 500-506, dass Kohlenstoffröhrchen ein Zurückhalten von Polysulfiden im Kathodenraum begünstigen und gleichzeitig für eine ausreichende elektrische Leitfähigkeit sorgen.

Wang et al. beschreiben in Advanced Materials, 14, 2002, Nr. 13-14, S. 963-965 und Advanced Functional Materials, 13, 2003, Nr. 6, S. 487-492 und Yu et al. beschreiben in Journal of Electroanalytical Chemistry, 573, 2004, 121-128 und Journal of Power Sources 146, 2005, 335-339 eine andere Technologie bei der Polyacrylnitril (kurz: PAN) mit einem Überschuss an elementarem Schwefel erhitzt wird, wobei der Schwefel zum einen unter Bildung von H₂S Polyacrylnitril zu einem Polymer mit konjugiertem π-System zyklisiert und zum anderen in der zyklisierten Matrix gebunden wird.

### Offenbarung der Erfindung

Gegenstand der vorliegenden Erfindung ist ein Verfahren zur Herstellung eines Polyacrylnitril-Schwefel-Kompositwerkstoffs, umfassend die Verfahrensschritte:
a) Umsetzen von Polyacrylnitril zu zyklisiertem Polyacrylnitril,
b) Umsetzen des zyklisierten Polyacrylnitrils mit Schwefel zu einem Polyacrylnitril-Schwefel-Kompositwerkstoff.

In Verfahrensschritt a) wird zunächst eine elektrisch leitfähige Basis in Form des elektrisch leitenden, zyklisierten Polyacrylnitrils (cPAN) gebildet. In Verfahrensschritt b) erfolgt dann die Umsetzung mit dem elektrochemisch aktiven Schwefel, insbesondere wobei dieser kovalent an das elektrisch leitende Gerüst aus zyklisiertem Polyacrylnitril unter Ausbildung eines Polyacrylnitril-Schwefel-Kompositwerkstoff (ScPAN) gebunden wird.

Durch eine Separation in zwei Teilreaktion können die Reaktionsbedingungen vorteilhafterweise auf die jeweilige Reaktion optimiert werden. Verfahrensschritt a) ähnelt dabei einer aus der Carbonfaserherstellung bekannten Dehydrierungsreaktion, wobei Verfahrensschritt b) einer Reaktion aus einem weiteren, vollkommen anderen technischen Gebiet, nämlich, der Vulkanisationsreaktion von Kautschuk ähnelt.

Das erfindungsgemäße Verfahren hat den Vorteil, dass es die Herstellung eines Polyacrylnitril-Schwefel-Kompositwerkstoff mit einer definierten Struktur ermöglicht. Der durch das erfindungsgemäße Verfahren herstellbare Polyacrylnitril-Schwefel-Kompositwerkstoff kann besonders vorteilhaft als Kathodenmaterial für Alkali-Schwefel-Zellen, insbesondere Lithium-Schwefel-Zellen, eingesetzt werden. Dabei können Kathoden beziehungsweise Alkali-Schwefel-Zellen, insbesondere Lithium-Schwefel-Zellen, die den erfindungsgemäß hergestellten Polyacrylnitril-Schwefel-Kompositwerkstoff umfassen, vorteilhafterweise - bezüglich bekannten Polyacrylnitril-Schwefel-Kompositwerkstoffen, verbesserte elektrochemische Eigenschaften aufweisen. Insbesondere kann so eine gute Langzeitstabilität beziehungsweise elektrochemische Zyklenstabilität erzielt werden, insbesondere wobei ein großer Teil des Aktivmaterials über einen langen Zeitraum elektrochemisch genutzt werden kann.

Im Rahmen einer Ausführungsform erfolgt Verfahrensschritt a) in einer sauerstoffhaltigen Atmosphäre, beispielsweise einer Luft- oder Sauerstoffatmosphäre. Eine sauerstoffhaltige Atmosphäre wirkt sich besonders vorteilhaft auf die Bildung von zyklisiertem Polyacrylnitril aus.

Im Rahmen einer weiteren Ausführungsform erfolgt Verfahrensschritt a) bei einer Temperatur in einem Bereich von ≥ 150 °C bis ≤ 500 °C, insbesondere von ≥ 150 °C bis ≤ 330 °C oder ≤ 300 °C oder ≤ 280 °C, beispielsweise von ≥ 230 °C bis ≤ 270 °C. Diese Temperaturen haben sich zur Synthese von zyklisiertem Polyacrylnitril als geeignet erwiesen.

Die Reaktionszeit kann in Verfahrensschritt a) vorteilhafterweise weniger als 3 h, insbesondere weniger als 2 h, beispielsweise weniger als 1 h, betragen.

Gegebenenfalls kann Verfahrensschritt a) in Gegenwart eines Zyklisierungskatalysators erfolgen. Als Zyklisierungskatalysatoren können beispielsweise aus der Carbonfaserherstellung bekannt Katalysatoren eingesetzt werden. Durch den Zusatz eines Zyklisierungskatalysators kann vorteilhafterweise die Reaktionstemperatur und/oder die Reaktionszeit in Verfahrensschritt a) verringert werden. Vorzugsweise wird in Verfahrensschritt a) das Reaktionsgemisch gelegentlich oder kontinuierlich gemischt. Dies wirkt sich ebenfalls vorteilhaft auf die Umsetzung von Polyacrylnitril zu zyklisiertem Polyacrylnitril aus.

Im Rahmen einer weiteren Ausführungsform wird in Verfahrensschritt b) elementarer Schwefel, beispielsweise sublimierter elementarer Schwefel, eingesetzt. Elementarer Schwefel, insbesondere sublimierter elementarer Schwefel, ist vorteilhafterweise kostengünstig und vergleichsweise einfach handhabbar. Grundsätzlich ist es jedoch ebenso möglich Verfahrensschritt b) mit Schwefelverbindungen, insbesondere welche unter Ausbildung einer kovalenten Schwefel-Kohlenstoffbindung mit dem zyklisierten Polyacrylnitril reagieren, einzusetzen.

Insbesondere kann in Verfahrensschritt b) der Schwefel im Überschuss eingesetzt werden.

Im Rahmen einer weiteren Ausführungsform beträgt in Verfahrensschritt b) das Gewichtsverhältnis von Schwefel zu zyklisiertem Polyacrylnitril ≥ 1:1, insbesondere ≥ 1,5:1, beispielsweise ≥ 2:1, zum Beispiel ≥ 3:1, und/oder ≤ 20:1, insbesondere ≤ 15:1 oder ≤ 10:1, beispielsweise ≤ 5:1 oder ≤ 3:1 oder ≤ 2,5:1 oder ≤ 2:1. Diese Mengenverhältnisse haben sich zur Durchführung des erfindungsgemäßen Verfahrens als geeignet erwiesen.

Im Rahmen einer weiteren Ausführungsform erfolgt Verfahrensschritt b) in einer Inertgasatmosphäre, beispielsweise in einer Argon- oder Stickstoffatmosphäre. Eine Inertgasatmosphäre wirkt sich besonders vorteilhaft auf die Umsetzung des zyklisierten Polyacrylnitrils mit Schwefel zu dem Polyacrylnitril-Schwefel-Kompositwerkstoff aus.

Verfahrensschritt b) kann insbesondere bei einer Temperatur in einem Bereich von ≥ 150 °C bis ≤ 500 °C, insbesondere von ≥ 150 °C bis ≤ 400 °C oder ≤ 380 °C oder ≤ 360 °C, beispielsweise von ≥ 180 °C bis ≤ 350 °C oder bis ≤ 330 °C, erfolgen.

Die Reaktionszeit kann in Verfahrensschritt b) weniger als 8 h, beispielsweise 1 h bis 7 h, zum Beispiel weniger als 3 h, betragen.

Im Rahmen einer weiteren Ausführungsform wird Verfahrensschritt b) zumindest zeitweilig in Gegenwart eines Vulkanisationskatalysators beziehungsweise Vulkanisationsbeschleunigers und/oder Vulkanisationsinhibitors durchgeführt.

Durch den Zusatz eines Vulkanisationskatalysators kann vorteilhafterweise nicht nur die Reaktionstemperatur und/oder die Reaktionszeit in Verfahrensschritt b) verringert werden. Durch eine Erniedrigung der Reaktionstemperatur kann zudem die Kettenlänge von an das zyklisierte Polyacrylnitril kovalent gebundenen Polysulfiden erhöht werden. Dies liegt darin begründet, dass elementarer Schwefel bei Raumtemperatur in Form von S₈-Ringen vorliegt. Bei Temperaturen oberhalb der Raumtemperatur liegt Schwefel in Form von Sₓ-Ketten mittlerer Kettenlänge, beispielsweise von 6 bis 26 Schwefelatomen, oder großer Kettenlänge, beispielsweise von 10³ bis 10⁶ Schwefelatomen, vor. Oberhalb von 187 °C beginnt ein thermischer Crackprozess und die Kettenlänge sinkt wieder. Ab 444,6°C (Siedepunkt) liegt gasförmiger Schwefel mit einer Kettenlänge von 1-8 Atomen vor. Die Verwendung eines Vulkanisationskatalysators hat dabei den Vorteil, dass bei einer niedrigeren Temperatur längere inter- und/oder intramolekulare, kovalent an das zyklisierte Polyacrylnitril gebundene Schwefelbrücken in den Polyacrylnitril-Schwefel-Kompositwerkstoff eingeführt werden können. So kann wiederum vorteilhafterweise ein höherer Schwefelgehalt des Polyacrylnitril-Schwefel-Kompositwerkstoffs erzielt werden. Dies kann zwar zu einer Verringerung der Zyklenstabilität führen, was jedoch beispielsweise durch die Wahl eines geeigneten Elektrolyten ausgeglichen werden kann.

Zur Katalyse beziehungsweise Vulkanisationsbeschleunigung kann insbesondere mindestens ein sulfidischer Radikalstarter, beispielsweise ein Sulfenamid, zum Beispiel ein 2-Mercaptobenzothiazoylaminderivat, oder ein sulfidischer Metallkomplex, beispielsweise erhältlich durch Reaktion von Zinkoxid (ZnO) und Tetramethylthiuramidisulfid, zugesetzt werden.

Um die Reaktionsgeschwindigkeit zu verringern oder eine Reaktionsphase mit einer, beispielsweise durch einen Vulkanisationskatalysator beziehungsweise Vulkanisationsbeschleuniger, erhöhten Reaktionsgeschwindigkeit zu beenden kann mindestens ein Vulkanisationsinhibitor zugesetzt werden.

Durch den Einsatz und die Dauer des Einsatzes von Vulkanisationskatalysatoren beziehungsweise Vulkanisationsbeschleunigern und/oder Vulkanisationsinhibitoren können die Eigenschaften des Polyacrylnitril-Schwefel-Kompositwerkstoff gezielt eingestellt werden. Hierfür geeignete Vulkanisationskatalysatoren beziehungsweise Vulkanisationsbeschleunigern und/oder Vulkanisationsinhibitoren sind aus dem technischen Gebiet der Kautschukvulkanisation bekannt. Als Vulkanisationsinhibitor kann beispielsweise N-(Cyclohexylthio)phthalamid eingesetzt werden.

Im Rahmen einer weiteren Ausführungsform umfasst das Verfahren weiterhin den Verfahrensschritt c): Entfernen, beispielsweise Extrahieren, von überschüssigem beziehungsweise ungebundenem Schwefel.

Bei der Verwendung des Polyacrylnitril-Schwefel-Kompositwerkstoffs als Kathodenmaterial einer Alkali-Schwefel-Zelle, kann ungebundener beziehungsweise elementarer Schwefel bei der Reduktion mit manchen Elektrolytsystemen reagieren, weswegen beim Vorliegen von ungebundenem beziehungsweise elementarem Schwefel die Wahl des Elektrolytsystems eingeschränkt ist. Durch ein Entfernen von überschüssigem beziehungsweise ungebundenem Schwefel können vorteilhafterweise weitere beziehungsweise andere Elektrolytsysteme eingesetzt und/oder Eigenschaften der Alkali-Schwefel-Zelle, insbesondere die Zyklenbeständigkeit, verbessert werden.

Gegebenenfalls können im gleichen Entfernungsschritt oder in einem weiteren Entfernungsschritt Katalysatoren und/oder Inhibitoren ebenfalls teilweise oder vollständig entfernt werden.

Vorzugsweise erfolgt Verfahrensschritt c) mittels einer Soxhlet-Extraktion, insbesondere mit einem apolaren Lösungsmittel oder Lösungsmittelgemisch, beispielsweise Toluol.

Es ist jedoch ebenso möglich, den nichtumgesetzten beziehungsweise überschüssigen beziehungsweise ungebundenen Schwefel in der Reaktionsmischung zu belassen. So kann vorteilhafterweise beim einer Verwendung des Reaktionsgemischs als Kathodenmaterial für eine Alkali-Schwefel-Zelle, insbesondere Lithium-Schwefel-Zelle, eine höhere Spannung und Kapazität der Zelle erzielt werden.

Dies liegt darin begründet, dass durch den überschüssigen beziehungsweise nichtumgesetzten beziehungsweise ungebundenen, insbesondere elementaren, Schwefel insbesondere in Kombination mit dem erfindungsgemäßen Polyacrylnitril-Schwefel-Kompositwerkstoff die Schwefelausnutzung verbessert werden kann. Zum Einen bietet nämlich der Polyacrylnitril-Schwefel-Kompositwerkstoff eine leitfähige Oberfläche an, die zur Reduktion von elementarem Schwefel genutzt werden kann. Zum Anderen kann durch den Polyacrylnitril-Schwefel-Kompositwerkstoff eine Abwanderung von bei einer Reduktion des elementaren Schwefels entstehenden Polysulfiden, beispielsweise in den Anodenbereich, gehemmt werden, indem der kovalent gebundene Schwefel des Polyacrylnitril-Schwefel-Kompositwerkstoffs mit den Polysulfiden reagiert und diese kovalent bindet. Dabei können die Polysulfidanionen Schwefelbrücken im Polyacrylnitril-Schwefel-Kompositwerkstoff öffnen, wobei zum Beispiel jeweils zwei Polysulfidmonoanionen entstehen, welche an einem Kettenende an das zyklisierte Polyacrylnitrilgerüst kovalent gebunden sind. Bei der folgenden Reduktion können derartige Polysulfidketten sukzessiv aufgebaut werden. Da diese Polysulfidketten kovalent an das zyklisierte Polyacrylnitrilgerüst gebunden sind, können diese auch nicht mehr vom Elektrolyten gelöst werden. So kann auf diese Weise vorteilhafterweise die Schwefelausnutzung und somit die Spannung und Kapazität gesteigert.

Ein weiterer Gegenstand der vorliegenden Erfindung ist ein Polyacrylnitril-Schwefel-Kompositwerkstoff, beispielsweise zur Verwendung als Kathodenmaterial für eine Alkali-Schwefel-Zelle, insbesondere für eine Lithium-Schwefel-Zelle. Insbesondere kann der erfindungsgemäße Polyacrylnitril-Schwefel-Kompositwerkstoff durch ein erfindungsgemäßes Verfahren hergestellt sein.

Die Schwefelatome können in dem erfindungsgemäßen Polyacrylnitril-Schwefel-Kompositwerkstoff sowohl direkt durch kovalente Schwefel-Kohlenstoffbindungen als auch indirekt durch eine oder mehrere kovalente Schwefel-Schwefelbindungen und eine oder mehrere Schwefel-Kohlenstoffbindungen mit dem zyklisierten Polyacrylnitrilgerüst verbunden sein. Dabei kann zumindest ein Teil der Schwefelatome des Polyacrylnitril-Schwefel-Kompositwerkstoffs, beispielsweise in Form von Polysulfidketten, mit einem zyklisierten Polyacrylnitrilstrang kovalent verbunden sein.

Es hat sich gezeigt, dass durch das erfindungsgemäße Verfahren ein Polyacrylnitril-Schwefel-Kompositwerkstoff hergestellt werden kann, welcher kovalent an das Polyacrylnitrilgerüst des Polyacrylnitril-Schwefel-Kompositwerkstoffs gebundene Polysulfidketten aufweisen kann, insbesondere welche, beispielsweise im Wesentlichen, eine Kettenlänge von ≥ 2 oder ≥ 3 oder ≥ 4, beispielsweise von ≥ 2 oder ≥ 3 bis ≤ 4, Schwefelatomen aufweisen.

Zum Einen kann durch das erfindungsgemäße Verfahren ein Polyacrylnitril-Schwefel-Kompositwerkstoff hergestellt werden, welcher Polysulfidketten, insbesondere mit einer Kettenlänge von ≥ 2 oder ≥ 3 bis ≤ 4 Schwefelatomen, aufweist, welche beidseitig intermolekular mit zwei zyklisierten Polyacrylnitrilsträngen, insbesondere unter Ausbildung einer Brücke, insbesondere Polysulfidbrücke, zwischen den zyklisierten Polyacrylnitrilsträngen, kovalent verbunden sind.

Zum Anderen kann durch das erfindungsgemäße Verfahren ein Polyacrylnitril-Schwefel-Kompositwerkstoff hergestellt werden, welcher Polysulfidketten, insbesondere mit einer Kettenlänge von ≥ 3 bis ≤ 4, zum Beispiel 3, Schwefelatomen, aufweist, welche beidseitig intramolekular mit einem zyklisierten Polyacrylnitrilstrang, insbesondere unter Ausbildung eines an den zyklisierten Polyacrylnitrilstrang annelierten S-Heterozyklus, beispielsweise Sechs- oder Siebenrings, kovalent verbunden sind.

Derartig kurze inter- und intramolekulare Polysulfidketten haben gegenüber längeren Polysulfidketten den Vorteil, dass ein höherer Prozentsatz der Schwefelatome direkt kovalent an Kohlenstoffatome (und nicht indirekt über Schwefel-Schwefel-Bindungen) gebunden ist. Schwefel-Kohlenstoff-Bindungen haben wiederum den Vorteil, dass diese bei der Reduktion stabil sind (und nicht wie Schwefel-Schwefel-Bindungen im Fall von langen Polysulfidketten bei der Reduktion aufgehoben werden können). So können Schwefel-Kohlenstoff-Bindungen vorteilhafterweise ein Wegdiffundieren von Schwefel und einen damit einhergehenden Aktivmaterialverlust verhindern.

Zudem hat sich herausgestellt, dass ein erfindungsgemäß hergestellter Polyacrylnitril-Schwefel-Kompositwerkstoff - im Gegensatz zu den nach Yu et al. hergestellten Polyacrylnitril-Schwefel-Kompositwerkstoffen - wenige beziehungsweise im Wesentlichen keine Thioamideinheit (S=CR(NR'R"), insbesondere S=CR(NHR')), aufweisen kann. Vorteilhafterweise kann durch das erfindungsgemäße Verfahren ein Polyacrylnitril-Schwefel-Kompositwerkstoff hergestellt werden, welcher, bezogen auf die Gesamtzahl an Schwefelatomen in dem Polyacrylnitril-Schwefel-Kompositwerkstoff, einen Anteil an in Thioamideinheiten gebundenen Schwefelatomen von ≤ 25 Atomprozent, insbesondere ≤ 20 Atomprozent oder ≤ 15 Atomprozent, beispielsweise ≤ 10 Atomprozent, aufweist. In Thioamideinheiten weist der Schwefel bereits eine Oxidationszahl von -2 auf und kann bei einer Verwendung in einer Kathode einer Alkali-Schwefel-Zelle, insbesondere einer Lithium-Schwefel-Zelle, theoretisch nicht weiter reduziert werden. Der Schwefel von Thioamideinheiten senkt somit die theoretische Schwefelausnutzung des Kathodenmaterials. Dadurch, dass durch das erfindungsgemäße Verfahren eine Entstehung von Thioamideinheiten verringert oder sogar verhindert werden kann, weist der durch das erfindungsgemäße Verfahren hergestellte Polyacrylnitril-Schwefel-Kompositwerkstoff vorteilhafterweise eine bessere Schwefelausnutzung auf.

Ein weiterer Gegenstand der vorliegenden Erfindung ist ein Kathodenmaterial für eine Alkali-Schwefel-Zelle, insbesondere für eine Lithium-Schwefel-Zelle, welches einen erfindungsgemäßen Polyacrylnitril-Schwefel-Kompositwerkstoff umfasst.

Weiterhin kann das Kathodenmaterial mindestens ein elektrisch leitendes Additiv, insbesondere ausgewählt aus der Gruppe bestehend aus Ruß, Graphit, Kohlenstofffasern, Kohlenstoffnanoröhrchen und Mischungen davon, umfassen.

Zudem kann das Kathodenmaterial weiterhin mindestens ein Bindemittel, beispielsweise Polyvinylidenfluorid (PVDF) und/oder Polytetrafluorethylen (PTFE), umfassen.

Beispielsweise kann das Kathodenmaterial
- ≥ 10 Gew.-% bis ≤ 95 Gew.-%, beispielsweise ≥ 70 Gew.-% bis ≤ 85 Gew.-%, an Polyacrylnitril-Schwefel-Kompositwerkstoff,
- ≥ 0,1 Gew.-% bis ≤ 30 Gew.-%, beispielsweise ≥ 5 Gew.-% bis ≤ 20 Gew.-%, an elektrisch leitenden Additiven, und
- ≥ 0,1 Gew.-% bis ≤ 30 Gew.-%, beispielsweise ≥ 5 Gew.-% bis ≤ 20 Gew.-%, an Bindemitteln
umfassen.

Dabei kann die Summe der Gewichtsprozentwerte von Polyacrylnitril-Schwefel-Kompositwerkstoff, elektrisch leitenden Additiven und Bindemitteln insbesondere insgesamt 100 Gewichtsprozent ergeben.

Im Rahmen einer Ausgestaltung kann das Kathodenmaterial weiterhin zusätzlichen elementaren Schwefel umfassen. Wie bereits im Zusammenhang mit dem überschüssigen beziehungsweise nichtumgesetzten Schwefel erläutert, kann durch die Anwesenheit von ungebundenem elementaren Schwefel vorteilhafterweise die Spannung und Kapazität der Zelle erhöht werden.

Beispielsweise kann das Kathodenmaterial dabei
- ≥ 10 Gew.-% bis ≤ 90 Gew.-%, beispielsweise ≥ 10 Gew.-% bis ≤ 30 Gew.-%, an Polyacrylnitril-Schwefel-Kompositwerkstoff,
- ≥ 5 Gew.-% bis ≤ 60 Gew.-%, beispielsweise ≥ 30 Gew.-% bis ≤60 Gew.-%, an elementarem Schwefel,
- ≥ 0,1 Gew.-% bis ≤ 30 Gew.-%, beispielsweise ≥ 5 Gew.-% bis ≤ 20 Gew.-%, an elektrisch leitenden Additiven, und
- ≥ 0,1 Gew.-% bis ≤ 30 Gew.-%, beispielsweise ≥ 5 Gew.-% bis ≤ 20 Gew.-%, an Bindemitteln
umfassen.

Dabei kann die Summe der Gewichtsprozentwerte von Polyacrylnitril-Schwefel-Kompositwerkstoff, elementarem Schwefel, elektrisch leitenden Additiven und Bindemitteln insbesondere insgesamt 100 Gewichtsprozent ergeben.

Weiterhin kann das Kathodenmaterial, insbesondere in Form eines Kathodenmaterialschlickers zur Herstellung einer Kathode, mindestens ein Lösungsmittel, beispielsweise N-Methyl-2-pyrrolidon, umfassen. Ein derartiger Kathodenmaterialschlicker kann, beispielsweise durch Rakeln, auf ein Trägermaterial, zum Beispiel eine Aluminiumplatte oder -folie, aufgebracht werden.

Die Lösungsmittel des Kathodenmaterialschlickers werden vorzugsweise nach dem Aufbringen des Kathodenmaterialschlickers und vor dem Zusammenbau der Lithium-Schwefel-Zelle, vorzugsweise vollständig, insbesondere durch ein Trocknungsverfahren, wieder entfernt.

Die Kathodenmaterial-Trägermaterial-Anordnung kann anschließend, beispielsweise durch Stanzen oder Schneiden, zu mehreren Kathodenmaterial-Trägermaterial-Einheiten zerteilt werden.

Die Kathodenmaterial-Trägermaterial-Anordnung beziehungsweise -einheiten können mit einer Lithiummetallanode, beispielsweise in Form einer Platte oder Folie aus metallischem Lithium, zu einer Lithium-Schwefel-Zelle verbaut werden.

Dabei kann insbesondere ein Elektrolyt zugesetzt werden. Der Elektrolyt kann beispielsweise mindestens ein Elektrolytlösungsmittel und mindestens ein Leitsalz umfassen. Beispielsweise kann das Elektrolytlösungsmittel ausgewählt sein aus der Gruppe bestehend aus Kohlensäureestern, insbesondere zyklischen oder azyklischen Carbonaten, Lactonen, Ethern, insbesondere zyklischen oder acyclischen Ethern, und Kombinationen davon. Zum Beispiel kann das Elektrolytlösungsmittel Diethylcarbonat (DEC), Dimethylcarbonat (DMC), Propylencarbonat (PC), Ethylencarbonat (EC), 1,3-Dioxolan (DOL), 1,2-Dimethoxyethan (DME) oder eine Kombination davon umfassen oder daraus bestehen. Das Leitsalz kann beispielsweise ausgewählt sein aus der Gruppe bestehend aus Lithiumhexafluorophosphat (LiPF₆), Lithiumbis(trifluormethylsulphonyl)imid (LiTFSI), Lithiumtetrafluoroborat (LiBF₄), Lithiumtrifluormethansulfonat (LiCF₃SO₃), Lithiumchlorat (LiClO₄), Lithiumbis(oxalato)borat (LiBOB), Lithiumfluorid (LiF), Lithiumnitrat (LiNO₃), Lithiumhexafluoroarsenat (LiAsF₆) und Kombinationen davon.

Insofern das Kathodenmaterial keinen oder wenig ungebundenen beziehungsweise elementaren Schwefel umfasst, ist das Elektrolytlösungsmittel vorzugsweise ausgewählt aus der Gruppe bestehend aus zyklischen Carbonaten, azyklischen Carbonaten und Kombinationen davon. Vorzugsweise wird dabei Lithiumhexafluorophosphat (LiPF₆) als Leitsalz eingesetzt.

Insofern das Kathodenmaterial ungebundenen beziehungsweise elementaren Schwefel, insbesondere zusätzlichen elementaren Schwefel, umfasst, ist das Elektrolytlösungsmittel vorzugsweise ausgewählt aus der Gruppe bestehend aus zyklischen Ethern, acyclischen Ethern und Kombinationen davon. Vorzugsweise wird dabei Lithiumbis(trifluormethylsulphonyl)imid (LiTFSI) als Leitsalz eingesetzt.

Ein weiterer Gegenstand der vorliegenden Erfindung ist eine Alkali-Schwefel-Zelle oder -batterie, insbesondere Lithium-Schwefel-Zelle oder -Batterie, mit einer alkalihaltigen, insbesondere lithiumhaltigen, Anode und einer Kathode, wobei die Kathode ein erfindungsgemäßes Kathodenmaterial umfasst.

Die Anode kann dabei insbesondere eine Alkalimetallanode, insbesondere eine Lithiummetallanode, beispielsweise in Form einer Platte oder Folie, zum Beispiel aus metallischem Lithium, sein.

Weiterhin kann die Alkali-Schwefel-Zelle einen, insbesondere vorstehend beschriebenen, Elektrolyten umfassen.

Im Rahmen einer weiteren Ausführungsform umfasst die Alkali-Schwefel-Zelle einen Elektrolyten aus mindestens einem Elektrolytlösungsmittel und mindestens einem Leitsalz.

Im Rahmen einer Ausgestaltung dieser Ausführungsform ist das Elektrolytlösungsmittel ausgewählt aus der Gruppe bestehend aus zyklischen Carbonaten, azyklischen Carbonaten und Kombinationen davon, und/oder das Leitsalz Lithiumhexafluorophosphat (LiPF₆). Diese Ausgestaltung hat sich als besonders vorteilhaft erwiesen, insofern das Kathodenmaterial keinen ungebundenen Schwefel enthält.

Im Rahmen einer anderen Ausgestaltung dieser Ausführungsform dieser Ausführungsform ist das Elektrolytlösungsmittel ausgewählt aus der Gruppe bestehend aus zyklischen Ethern, acyclischen Ethern und Kombinationen davon, und/oder das Leitsalz Lithiumbis(trifluormethylsulphonyl)imid (LiTFSI). Diese Ausgestaltung hat sich als besonders vorteilhaft erwiesen, insofern das Kathodenmaterial ungebundenen Schwefel enthält.

Ein weiterer Gegenstand der vorliegenden Erfindung ist ein Energiespeicher, insbesondere mobiler oder stationärer Energiespeicher, welcher eine erfindungsgemäße Alkali-Schwefel-Zelle -oder Batterie, insbesondere Lithium-Schwefel-Zelle oder -Batterie, umfasst. Zum Beispiel kann es sich bei dem Energiespeicher um einen Energiespeicher für ein Fahrzeug, beispielsweise ein Elektro- oder Hybridfahrzeug, oder ein Elektrowerkzeug oder -gerät, beispielsweise einen Schraubendreher oder ein Gartengerät, oder ein elektronisches Gerät, beispielsweise einen tragbaren Computer und/oder eine Telekommunikationsgerät, wie ein Mobiltelefon, PDA, oder ein Hochenergiespeichersystem für ein Haus oder eine Anlage handeln. Da die erfindungsgemäßen Alkali-Schwefel-Zellen oder - Batterien eine sehr hohe Energiedichte aufweisen, sind diese besonders für Fahrzeuge und stationäre Speichersysteme, wie Hochenergiespeichersysteme für Häuser oder Anlagen, geeignet.

### Zeichnungen und Beispiele

Weitere Vorteile und vorteilhafte Ausgestaltungen der erfindungsgemäßen Gegenstände werden durch die Zeichnungen veranschaulicht und in der nachfolgenden Beschreibung erläutert. Dabei ist zu beachten, dass die Zeichnungen nur beschreibenden Charakter haben und nicht dazu gedacht sind, die Erfindung in irgendeiner Form einzuschränken. Es zeigen
- Fig. 1: Rektionsschema zur Veranschaulichung einer Ausführungsform des erfindungsgemäßen Verfahrens sowie dessen Unterschieds zum Stand der Technik;
- Fig. 2: einen Graphen, in dem die Kapazität, bezogen auf die gesamte Masse des Kathodenmaterials, einer Ausführungsform eines Polyacrylnitril-Schwefel-Kompositwerkstoffs nach Beispiel 1.1 und 1.2 gegenüber der Zyklenzahl aufgetragen ist;
- Fig. 3: einen Graphen, in dem die spezifische Kapazität, bezogen auf das Schwefelgewicht der Kathode, gegenüber der Zyklenzahl für den Polyacrylnitril-Schwefel-Kompositwerkstoff nach Beispiel 1.1 aufgetragen ist,
- Fig. 4a: ToF-SIMS-Spektren der Polyacrylnitril-Schwefel-Kompositwerkstoffe nach Beispiel 1.1 und 1.2;
- Fig. 4b: XPS-Spektren der Polyacrylnitril-Schwefel-Kompositwerkstoffe nach Beispiel 1.1 und 1.2;
- Fig. 4c: FT-IR-Spektren der Polyacrylnitril-Schwefel-Kompositwerkstoffe nach Beispiel 1.1 und 1.2; und
- Fig. 5: einen Graphen, in dem die Spannung gegenüber der Kapazität, bezogen auf die gesamte Masse der Kathode, für den Polyacrylnitril-Schwefel-Kompositwerkstoff nach Beispiel 1.2 vor und nach der Toluol-Soxhlet-Extraktion aufgetragen ist.

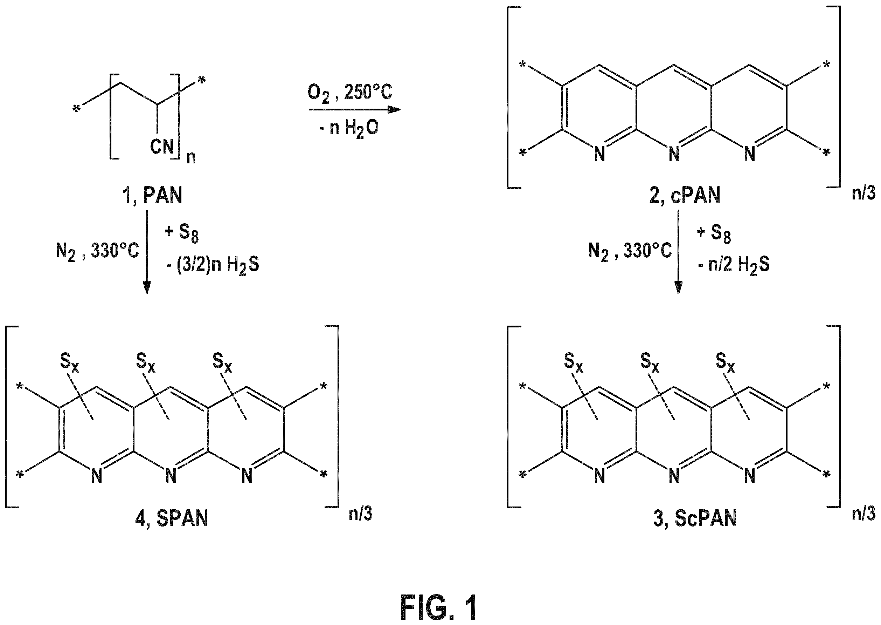

Figur 1 veranschaulicht, dass das erfindungsgemäße Verfahren zur Herstellung eines Polyacrylnitril-Schwefel-Kompositwerkstoff zwei Teilreaktionen umfasst. In einem ersten Verfahrensschritt a) wird Polyacrylnitril (PAN) 1 zu zyklisiertem Polyacrylnitril 2 umgesetzt, wobei das zyklisierte Polyacrylnitril (cPAN) 2 in einem zweiten Verfahrensschritt b) mit Schwefel zu einem erfindungsgemäßen Polyacrylnitril-Schwefel-Kompositwerkstoff (ScPAN) 3 umgesetzt wird. Im Rahmen der in Figur 1 gezeigten Ausführungsform wird Verfahrensschritt a) Polyacrylnitril (PAN) 1 in einer sauerstoffhaltigen Atmosphäre, beispielsweise in einer Luft- oder Sauerstoffatmosphäre, bei einer Synthesetemperatur von etwa 250 C, gegebenenfalls unter gelegentlichem Durchmischen, innerhalb etwa einer Stunde unter Bildung von Wasser und schwarzem, pulverförmigen, zyklisierten Polyacrylnitril (cPAN) 2 umgesetzt, wobei in Verfahrensschritt b) eine 1:3 (w/w) Mischung aus dem zyklisierten Polyacrylnitril (cPAN) 2 und elementarem Schwefel in einer inertgashaltigen Atmosphäre bei einer Synthesetemperatur von etwa 330 °C innerhalb etwa sechs Stunde unter Bildung von Schwefelwasserstoff und einem erfindungsgemäßen schwarzen Polyacrylnitril-Schwefel-Kompositwerkstoff (ScPAN) 3 umgesetzt wird.

Damit unterscheidet sich das erfindungsgemäße Verfahren von dem ebenfalls in Figur 1 gezeigten einstufigen Verfahren nach Yu et al. und Wang et al., in welchen Polyacrylnitril 1 direkt mit elementarem Schwefel in einer Argon- oder Stickstoffatmosphäre unter Bildung von Schwefelwasserstoff zu einem Polyacrylnitril-Schwefel-Kompositwerkstoff (SPAN) 4 umgesetzt wird.

Die in Figur 1 für den erfindungsgemäßen Polyacrylnitril-Schwefel-Kompositwerkstoff (ScPAN) 3 und den Polyacrylnitril-Schwefel-Kompositwerkstoff (SPAN) 4 nach Yu et al. abgebildeten chemischen Strukturformeln sind stark vereinfacht. Bei einer detaillierten Betrachtung unterscheiden sich die beiden Polyacrylnitril-Schwefel-Kompositwerkstoffe (ScPAN) 3 und (SPAN) 4 deutlich. Insbesondere weist ein erfindungsgemäßer Polyacrylnitril-Schwefel-Kompositwerkstoff (ScPAN) 3 einen höheren Anteil an direkt kovalent an Kohlenstoff gebundenen Schwefelatomen sowie einen geringeren an Anteil beziehungsweise im Wesentlichen keine Thioamideinheit als der Polyacrylnitril-Schwefel-Kompositwerkstoff (SPAN) 4 nach Yu et al. und Wang et al. auf.

### Beispiele

### 1. Polyacrylnitril-Schwefel-Kompositwerkstoff-Synthese

### 1.1 Synthese eines erfindungsgemäßen Polyacrylnitril-Schwefel-Kompositwerkstoffs (ScPAN) 3

3g Polyacrylnitril (PAN) wurden unter gelegentlichem Umrühren in einem Rundkolben unter Luftatmosphäre auf 250 °C für 1 Stunde erhitzt. Es bildete sich ein schwarzes Pulver zyklisiertes Polyacrylnitril (cPAN) (Elementaranalyse: (C: 64,7, N: 23,2, O: 9,1, H: 3,2) und Wasserdampf. Das so synthetisierte zyklisierte Polyacrylnitril (cPAN) wurde mit elementarem Schwefel in einem Gewichtsverhältnis cPAN:S von 1:3, durch Mörsern oder durch Dispergieren in Ethanol mittels eines unter dem Handelsnamen Ultraturax vertriebenen Mischers und anschließendem Entfernen des Lösungsmittels, fein gemischt. Dann wurde das Gemisch in einem Schlenkkolben unter Stickstoffatmosphäre auf 330 °C für 6 Stunden erhitzt.

Um überschüssigen Schwefel zu entfernen und den Anteil an kovalent gebundenem Schwefel zu bestimmen, wurde das Gemisch in einer Toluol-Soxhlet-Extraktion für 6 Stunden gereinigt. Anschließend wurde der so erhaltene Polyacrylnitril-Schwefel-Kompositwerkstoff (ScPAN) 3 für 24 Stunden im Vakuum bei 100 °C getrocknet. Elementaranalysen (C: 53,0, S: 17,6, N: 18,2, O: 9,3, H: 1,7) zeigten, dass bei dem erfindungsgemäßen Polyacrylnitril-Schwefel-Kompositwerkstoff (ScPAN) 3 der Schwefelgehalt vor und nach der Extraktion gleich hoch war. Dies lässt darauf schließen, dass in dem erfindungsgemäßen Polyacrylnitril-Schwefel-Kompositwerkstoff (ScPAN) 3 der Schwefel von Anfang an vollständig kovalent gebunden vorlag.

### 1.2 Vergleichsversuch: Synthese eines Polyacrylnitril-Schwefel-Kompositwerkstoffs (SPAN) 4 nach Yu et al.

Der Polyacrylnitril-Schwefel-Kompositwerkstoff (SPAN) 4 analog zu Yu et al. bei einer Temperatur von 330 °C hergestellt. Das Rohproduktes wies einen Schwefelgehalt von 48 Gew.-% auf. Um den Anteil an kovalent gebundenem Schwefel zu bestimmen und dafür überschüssigen Schwefel zu entfernen, wurde das Gemisch in einer Toluol-Soxhlet-Extraktion für 6 Stunden gereinigt. Anschließend wurde der so erhaltene Polyacrylnitril-Schwefel-Kompositwerkstoff (SPAN) 4 für 24 Stunden im Vakuum bei 100 °C getrocknet. Eine Probe des gereinigten und getrockneten Produktes zeigte einen Gehalt an kovalent gebundenem Schwefel von 42 %, bezogen auf das Gesamtgewicht des Polyacrylnitril-Schwefel-Kompositwerkstoffs (SPAN) 4. Dies lässt darauf schließen, dass der Polyacrylnitril-Schwefel-Kompositwerkstoff (SPAN) 4 neben kovalent gebundenem Schwefel 6 % ungebundenen elementaren Schwefel enthielt.

### 2. Herstellung von Lithium-Schwefel-Zellen

Die Polyacrylnitril-Schwefel-Kompositwerkstoffe aus Beispiel 1.1 und 1.2 wurden mit Ruß (Super PLi) und Polyvinylidenfluorid (Solef 6020) in einem Gewichtsprozentverhältnis von 70:15:15 in N-methyl-2-pyrrolidon (NMP) zu einem Kathodenmaterialschlicker verarbeitet. Der Schlicker wurde auf eine Aluminiumfolie (Roth) gerakelt (Nassschichtdicke 400 µm) und vakuumgetrocknet. Nach vollständiger Trocknung wurde jeweils eine Kathode ausgestanzt und in einer Testzelle gegen eine folienförmige Lihtiummetallanode verbaut. Als Separator wurde ein unter dem Handelsnamen Celgard 2400 erhältlicher Separator verwendet. Als Elektrolyt wurde1 mol LiPF₆ in Ethylencarbonat(EC): Diethylcarbonat(DEC):Dimethylcarbonat(DMC) in einem Volumenverhältnis von 2:2:1 verwendet. Die Testzellen wurden mit BaSyTec-Software ausgewertet.

### 3. Analyseergebnisse

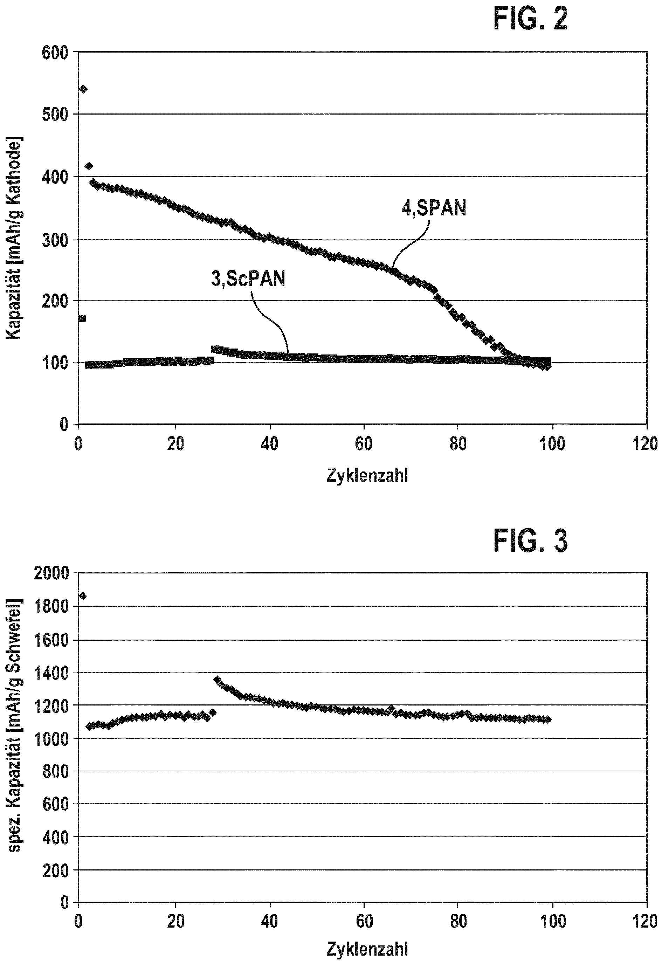

Figur 2 zeigt den Kapazitätsverlauf, bezogen auf die gesamte Masse des Kathodenmaterials, der Polyacrylnitril-Schwefel-Kompositwerkstoffe aus Beispiel 1.1 und 1.2. Figur 2 zeigt, dass der erfindungsgemäße, durch Soxhlet-Extraktion aufgereinigte, erfindungsgemäße Polyacrylnitril-Schwefel-Kompositwerkstoff (ScPAN) 3 eine hervorragende Zyklenstabilität aufweist. Figur 2 zeigt weiterhin, dass der Polyacrylnitril-Schwefel-Kompositwerkstoff (SPAN) 4 zwar eine höhere anfängliche Kapazität, jedoch eine deutlich schlechtere Zyklenstabilität als der erfindungsgemäße Polyacrylnitril-Schwefel-Kompositwerkstoff (ScPAN) 3 aufweist. Figur 2 zeigt zudem, dass die Kapazität des Polyacrylnitril-Schwefel-Kompositwerkstoffs (SPAN) 4 ab etwa dem 95. Zyklus unter die des erfindungsgemäßen Polyacrylnitril-Schwefel-Kompositwerkstoffs (ScPAN) 3 sinkt, was zeigt, dass in dem Polyacrylnitril-Schwefel-Kompositwerkstoff (SPAN) 4 weiterer nicht kovalenten gebundener Schwefel enthalten ist beziehungsweise gebildet wird, welcher - im Gegensatz zu dem erfindungsgemäßen Polyacrylnitril-Schwefel-Kompositwerkstoffs (ScPAN) 3 - weiter der elektrochemischen Reaktion entzogen wird. Der starke Abfall bei den anfänglichen Messpunkten, kann dahingehend gedeutet werden, dass in beiden Fällen irreversible elektrochemische Reaktionen ablaufen, die im kontinuierlichen Zyklisieren des erfindungsgemäßen Polyacrylnitril-Schwefel-Kompositwerkstoffs (ScPAN) 3 jedoch nur mit einer deutlich geringeren Intensität auftreten.

Figur 3 zeigt den Verlauf der spezifischen Kapazität, bezogen auf die Schwefelmasse, des erfindungsgemäßen Polyacrylnitril-Schwefel-Kompositwerkstoffs aus Beispiel 1.1. Figur 3 beruht auf der gleichen Messung wie Figur 2.

Die Beispiele zeigen deutlich, dass durch ein erfindungsgemäßer Polyacrylnitril-Schwefel-Kompositwerkstoff (ScPAN) 3 elektrochemisch aktiv ist und eine sehr gute Zyklenstabilität aufweist. Durch Optimierung der Synthesebedingungen ist es möglich den Schwefelgehalt weiter zu steigern und somit die Kapazität zu erhöhen.

Zusätzlich wurden von den Produkten aus Beispiel 1.1 und 1.2 ToF-SIMS-Spektren aufgenommen (ToF-SIMS 5 von ION-TOF). Weiterhin wurden XPS-Analysen mit einem PHI Quantera SXM-Spektrometer unter Verwendung von fokussierter, monochromisierter AlKα-Strahlung (1486,6 eV) mit einer konstanten Betriebsenergie von 55 eV durchgeführt. Die Spektrometer wurden unter Verwendung der Photoemissionslinien von Au (Au4f7/2 = 83,96 ± 0,1 eV), Ag (Ag3d5/2 = 368,21 ± 0,1 eV) und Cu (Cu2p3/2 = 932,62 ± 0,1 eV) kalibriert. Bei der Ag3d5/2-Linie betrug die Halbwertbreite (FWHM) unter den Messbedingungen 0,63 eV. Der Messbereich wies einen Durchmesser von 100 µm auf. Der Druck in der Messkammer lag in einem Bereich von 10-9 Torr. Zudem wurden FT-IR-Spektren aufgenommen.

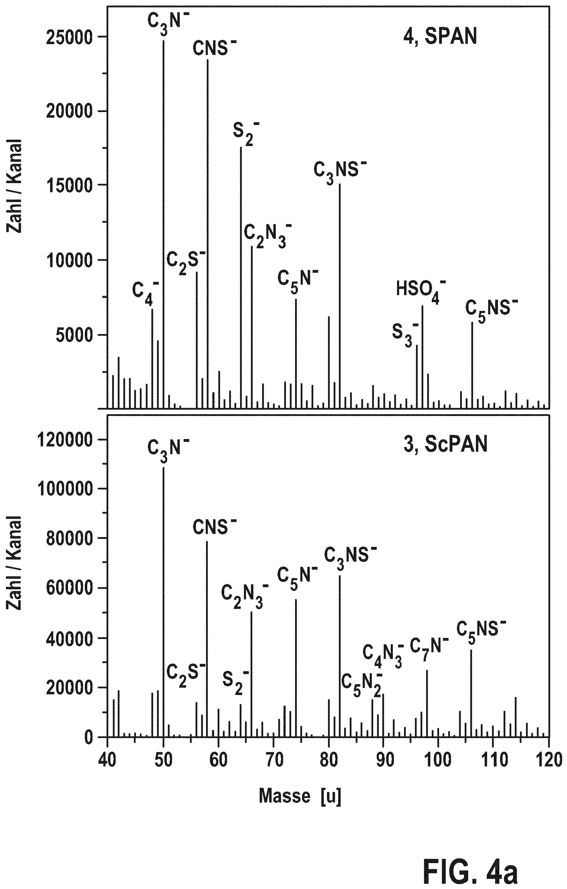

Figur 4a zeigt ToF-SIMS-Spektren des erfindungsgemäßen ScPAN-Kompositwerkstoffs 3 nach Beispiel 1.1 und des Vergleichskompositwerkstoffs SPAN 4 nach Beispiel 1.2. Die Spektren zeigen eine deutlich unterschiedliche Fragmentierung, insbesondere unterschiedliche CNS-Fragmente, beispielsweise CNS-¬ und C3NS-. Weiterhin wurden zwar, CS-Fragmente (C2S-), jedoch keine SN-Fragmente, beispielsweise mit m/z = 46, detektiert. Dies lässt den Schluss zu, dass keine Schwefel-Stickstoff-Bindungen vorlagen. Das starke Signal bei m/z = 58 kann CNS- zugewiesen werden und zeigt, dass ein hoher Teil des Schwefel an Kohlenstoffatome gebunden ist, welche benachbart zu Stickstoffatomen sind. Grundsätzlich gibt es mehrere Möglichkeiten, wie Schwefel an Kohlenstoff gebunden sein kann, beispielsweise als inter- und intermolekulare Ringe und Ketten.

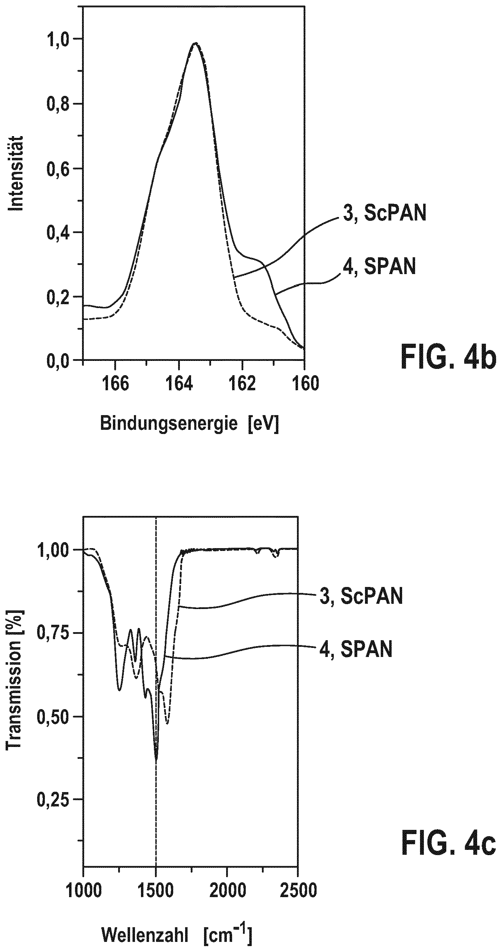

Die in Figur 4b gezeigten XPS-Spektren des erfindungsgemäßen ScPAN-Kompositwerkstoffs 3 nach Beispiel 1.1 und des Vergleichskompositwerkstoffs SPAN 4 nach Beispiel 1.2 sind ebenfalls unterschiedlich. Das Signal bei 163,5 eV steht für ein Elektron eines direkt an Kohlenstoff oder Schwefel gebundenen Schwefelatoms, wie in Organosulfiden. Die Schulter bei 161,5 eV im Spektrum des Vergleichskompositwerkstoffs SPAN 4 nach Beispiel 1.2, tritt nicht beim erfindungsgemäßen ScPAN-Kompositwerkstoff 3 nach Beispiel 1.1 auf und kann als Hinweis für sulfidischen Schwefel (2-) gedeutet werden.

Die in Figur 4c gezeigten FT-IR-Spektren des erfindungsgemäßen ScPAN-Kompositwerkstoffs 3 nach Beispiel 1.1 und des Vergleichskompositwerkstoffs SPAN 4 nach Beispiel 1.2 sind ebenfalls unterschiedlich. In dem Bereich von 2400 cm⁻¹ bis 1800 cm⁻¹ sind die Spektren ähnlich. Bei 1500 cm⁻¹ weist jedoch nur der Vergleichskompositwerkstoff SPAN 4 nach Beispiel 1.2 ein starkes Signal auf, welches Thioamid, welches sulfidischen Schwefel mit der Oxidationszahl -2 aufweist, zugeordnet werden kann. Dies kann dadurch erklärt werden, dass bei der einstufigen Synthese nach Beispiel 1.2 Schwefelwasserstoff gebildet wird, welcher mit der Nitrilgruppe von PAN zu einem Thioamid reagieren kann. In der erfindungsgemäßen mehrstufigen Synthese kann diese Reaktion nicht auftreten, da die Nitrilgruppen bereits abreagiert sind bevor Schwefel hinzugegeben wird.

Daher resultiert vermutlich ein Teil der CNS-Fragmente im ToF-SIMS des Vergleichskompositwerkstoffs SPAN 4 nach Beispiel 1.2 aus Thioamiden. Daneben gibt es vermutlich weitere funktionelle Gruppen, welche in CNS-Fragmente fragmentieren. Eine Möglichkeit hierfür wäre ortho-Thiopyridin.

Die geringe Signalstärke von S2- and S3-Fragmenten im Spektrum des erfindungsgemäßen Kompositwerkstoffs ScPAN 3 weist zudem auf eine geringere Polysulfidkettenlänge von 2 bis 4 Schwefelatomen hin. Zudem gibt es Hinweise auf Sechsringe aus 3 Kohlenstoffatomen und 3 Schwefelatomen, als beidseitig intramolekulare kovalent gebundenen, einen annelierten Sechsring formenden, Polysulfidkette mit 3 Schwefelatomen, in dem erfindungsgemäßen Kompositwerkstoff ScPAN 3.

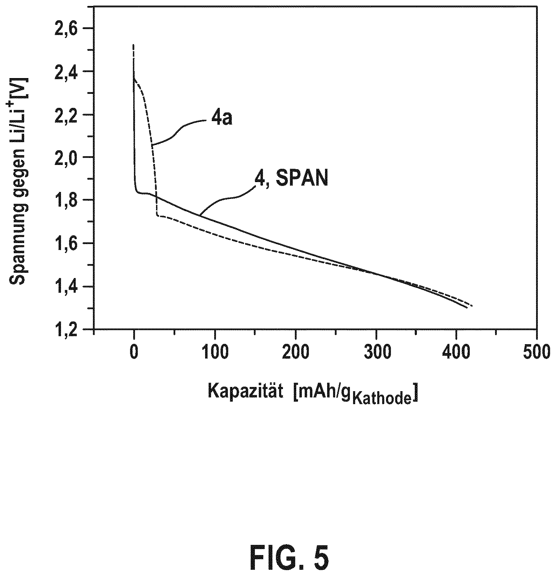

Figur 5 zeigt Spannungsverläufe des Vergleichskompositwerkstoffs SPAN nach Beispiel 1.2 vor 4a und nach 4 der Schwefel-Extraktion (Kompositgehalt 70 Gew.-% gegen Lithiummetallanode, Zyklenrate C/10). Der Spannungsverlauf des unaufgereinigten, elementaren Schwefel enthaltenden Vergleichskompositwerkstoffs 4a zeigt während des ersten Entladezyklus eine deutliche Schulter zu Beginn, welche bei dem aufgereinigten Vergleichskompositwerkstoffs SPAN 4 nicht zu beobachten ist und als Zeichen für die Anwesenheit von elementarem Schwefel und einen geringeren Anteil an kovalent gebundenem Schwefel gedeutet werden kann. Zudem tritt in beiden Fällen ein deutlicher Spannungsabfall auf, welcher dahingehend gedeutet werden kann, dass Schwefelatome, welche nicht direkt kovalent an Kohlenstoff, sondern an Schwefel gebunden sind, reduziert und durch Diffusion der Reaktion entzogen werden können.

## Patentansprüche

1. Verfahren zur Herstellung eines Polyacrylnitril-Schwefel-Kompositwerkstoff, umfassend die Verfahrensschritte:
a) Umsetzen von Polyacrylnitril (1) zu zyklisiertem Polyacrylnitril (2),
b) Umsetzen des zyklisierten Polyacrylnitrils (2) mit Schwefel zu einem Polyacrylnitril-Schwefel-Kompositwerkstoff (3).

2. Verfahren nach Anspruch 1, wobei Verfahrensschritt a) in einer sauerstoffhaltigen Atmosphäre, beispielsweise einer Luft- oder Sauerstoffatmosphäre, erfolgt.

3. Verfahren nach Anspruch 1 oder 2, wobei Verfahrensschritt a) bei einer Temperatur in einem Bereich von ≥ 150 °C bis ≤ 500 °C, insbesondere von ≥ 150 °C bis ≤ 330 °C oder ≤ 300 °C oder ≤ 280 °C, beispielsweise von ≥ 230 °C bis ≤ 270 °C, erfolgt.

4. Verfahren nach einem der Ansprüche 1 bis 3, wobei in Verfahrensschritt b) elementarer Schwefel, beispielsweise sublimierter elementarer Schwefel, eingesetzt wird.

5. Verfahren nach einem der Ansprüche 1 bis 4, wobei in Verfahrensschritt b) das Gewichtsverhältnis von Schwefel zu zyklisiertem Polyacrylnitril (2) ≥ 1:1, insbesondere ≥ 1,5:1, beispielsweise ≥ 2:1, zum Beispiel ≥ 3:1, und/oder ≤ 20:1, insbesondere ≤ 15:1 oder ≤ 10:1, beispielsweise ≤ 5:1 oder ≤ 3:1 oder ≤ 2,5:1 oder ≤ 2:1, beträgt.

6. Verfahren nach einem der Ansprüche 1 bis 5, wobei Verfahrensschritt b) in einer Inertgasatmosphäre, beispielsweise in einer Argon- oder Stickstoffatmosphäre, erfolgt.

7. Verfahren nach einem der Ansprüche 1 bis 6, wobei Verfahrensschritt b) zumindest zeitweilig in Gegenwart eines Vulkanisationskatalysators beziehungsweise Vulkanisationsbeschleunigers und/oder Vulkanisationsinhibitors durchgeführt wird.

8. Verfahren nach einem der Ansprüche 1 bis 7, wobei das Verfahren weiterhin den Verfahrensschritt c):
Entfernen, beispielsweise Extrahieren, von überschüssigem beziehungsweise ungebundenem Schwefel,
umfasst.

9. Polyacrylnitril-Schwefel-Kompositwerkstoff, beispielsweise zur Verwendung als Kathodenmaterial für eine Alkali-Schwefel-Zelle, insbesondere für eine Lithium-Schwefel-Zelle, hergestellt durch ein Verfahren nach einem der Ansprüche 1 bis 8.

10. Polyacrylnitril-Schwefel-Kompositwerkstoff, beispielsweise zur Verwendung als Kathodenmaterial für eine Alkali-Schwefel-Zelle, insbesondere für eine Lithium-Schwefel-Zelle, wobei
- der Polyacrylnitril-Schwefel-Kompositwerkstoff Polysulfidketten mit einer Kettenlänge von ≥ 2 oder ≥ 3 bis ≤ 4 Schwefelatomen aufweist, welche beidseitig intermolekular mit zwei zyklisierten Polyacrylnitrilsträngen, kovalent verbunden sind, und/oder
- der Polyacrylnitril-Schwefel-Kompositwerkstoff Polysulfidketten mit einer Kettenlänge von ≥ 3 bis ≤ 4, zum Beispiel 3, Schwefelatomen aufweist, welche beidseitig intramolekular mit einem zyklisierten Polyacrylnitrilstrang, kovalent verbunden sind, und/oder
- der Polyacrylnitril-Schwefel-Kompositwerkstoff, bezogen auf die Gesamtzahl an Schwefelatomen in dem Polyacrylnitril-Schwefel-Kompositwerkstoff, einen Anteil an in Thioamideinheiten gebundenen Schwefelatomen von ≤ 25 Atomprozent, insbesondere ≤ 20 Atomprozent oder ≤ 15 Atomprozent, beispielsweise ≤ 10 Atomprozent, aufweist.

11. Kathodenmaterial für eine Alkali-Schwefel-Zelle, insbesondere für eine Lithium-Schwefel-Zelle, umfassend einen Polyacrylnitril-Schwefel-Kompositwerkstoff nach Anspruch 9 oder 10.

12. Alkali-Schwefel-Zelle oder -batterie, insbesondere Lithium-Schwefel-Zelle oder -Batterie, mit einer alkalihaltigen, insbesondere lithiumhaltigen, Anode und einer Kathode, wobei die Kathode ein Kathodenmaterial nach Anspruch 11 umfasst.

13. Alkali-Schwefel-Zelle nach Anspruch 12, wobei die Alkali-Schwefel-Zelle einen Elektrolyten aus mindestens einem Elektrolytlösungsmittel und mindestens einem Leitsalz umfasst,
- wobei das Elektrolytlösungsmittel ausgewählt ist aus der Gruppe bestehend aus zyklischen Carbonaten, azyklischen Carbonaten und Kombinationen davon, und/oder das Leitsalz Lithiumhexafluorophosphat ist, oder
- wobei das Elektrolytlösungsmittel ausgewählt ist aus der Gruppe bestehend aus zyklischen Ethern, acyclischen Ethern und Kombinationen davon, und/oder das Leitsalz Lithiumbis(trifluormethylsulphonyl)imid ist.

14. Energiespeicher, insbesondere mobiler oder stationärer Energiespeicher, zum Beispiel für ein Fahrzeug, beispielsweise ein Elektro- oder Hybridfahrzeug, ein Elektrowerkzeug oder -gerät, beispielsweise einen Schraubendreher oder ein Gartengerät, ein elektronisches Gerät, beispielsweise einen tragbaren Computer und/oder eine Telekommunikationsgerät, wie ein Mobiltelefon, PDA, oder ein Hochenergiespeichersystem für ein Haus oder eine Anlage, umfassend eine Alkali-Schwefel-Zelle -oder Batterie, insbesondere Lithium-Schwefel-Zelle oder -Batterie, nach Anspruch 12 oder 13.

## Claims

1. Process for producing a polyacrylonitrile-sulphur composite material comprising the process steps of:
a) reacting polyacrylonitrile (1) to afford cyclized polyacrylonitrile (2),
b) reacting the cyclized polyacrylonitrile (2) with sulphur to afford a polyacrylonitrile-sulphur composite material (3).

2. Process according to Claim 1, wherein process step a) is carried out in an oxygen-containing atmosphere, for example an air or oxygen atmosphere.

3. Process according to Claim 1 or 2, wherein process step a) is carried out at a temperature in a range from ≥ 150°C to ≤ 500°C, in particular from ≥ 150°C to ≤ 330°C or ≤ 300°C or ≤ 280°C, for example from ≥ 230°C to ≤ 270°C.

4. Process according to any of Claims 1 to 3, wherein in process step b) elemental sulphur, for example sublimed elemental sulphur, is employed.

5. Process according to any of Claims 1 to 4, wherein in process step b) the weight ratio of sulphur to cyclized polyacrylonitrile (2) is ≥ 1:1, in particular ≥ 1.5:1, for example ≥ 2:1, for example ≥ 3:1, and/or ≤ 20:1, in particular ≤ 15:1 or ≤ 10:1, for example ≤ 5:1 or ≤ 3:1 or ≤ 2.5:1 or ≤ 2:1.

6. Process according to any of Claims 1 to 5, wherein process step b) is carried out in an inert gas atmosphere, for example in an argon or nitrogen atmosphere.

7. Process according to any of Claims 1 to 6, wherein process step b) is performed at least for a time in the presence of a vulcanization catalyst/vulcanization accelerator and/or vulcanization inhibitor.

8. Process according to any of Claims 1 to 7, wherein the process further comprises the process step c): removing, for example extracting, excess/unbound sulphur.

9. Polyacrylonitrile-sulphur composite material, for example for use as cathode material for an alkali metal-sulphur cell, in particular for a lithium-sulphur cell, produced by a process according to any of Claims 1 to 8.

10. Polyacrylonitrile-sulphur composite material, for example for use as cathode material for an alkali metal-sulphur cell, in particular for a lithium-sulphur cell, wherein
- the polyacrylonitrile-sulphur composite material comprises polysulphide chains having a chain length of ≥ 2 or ≥ 3 to ≤ 4 sulphur atoms which are on both sides intramolecularly covalently bonded to two cyclized polyacrylonitrile strands and/or
- the polyacrylonitrile-sulphur composite material comprises polysulphide chains having a chain length of ≥ 3 to ≤ 4, for example 3, sulphur atoms which are on both sides intramolecularly covalently bonded to one cyclized polyacrylonitrile strand and/or
- the polyacrylonitrile-sulphur composite material comprises based on the total number of sulphur atoms in the polyacrylonitrile-sulphur composite material a proportion of sulphur atoms bound in thioamide units of ≤ 25 atom percent, in particular ≤ 20 atom percent or ≤ 15 atom percent, for example ≤ 10 atom percent.

11. Cathode material for an alkali metal-sulphur cell, in particular for a lithium-sulphur cell, comprising a polyacrylonitrile-sulphur composite material according to Claim 9 or 10.

12. Alkali metal-sulphur cell or battery, in particular lithium-sulphur cell or battery, comprising an alkali metal-containing, in particular lithium-containing, anode and a cathode, wherein the cathode comprises a cathode material according to Claim 11.

13. Alkali metal-sulphur cell according to Claim 12, wherein the alkali metal-sulphur cell comprises an electrolyte made of at least one electrolyte solvent and at least one conducting salt,
- wherein the electrolyte solvent is selected from the group consisting of cyclic carbonates, acyclic carbonates and combinations thereof and/or the conducting salt is lithium hexafluorophosphate or
- wherein the electrolyte solvent is selected from the group consisting of cyclic ethers, acyclic ethers and combinations thereof and/or the conducting salt is lithium bis(trifluoromethylsulphonyl)imide.

14. Energy storage means, in particular mobile or stationary energy storage means, for example for a vehicle, for example an electric or hybrid vehicle, an electrical tool or device, for example a screwdriver or a garden device, an electronic device, for example a wearable computer and/or a telecommunication device, such as a mobile telephone, PDA, or a high-energy storage system for a house or a plant comprising an alkali metal-sulphur cell or battery, in particular lithium-sulphur cell or battery, according to Claim 12 or 13.

## Revendications

1. Procédé pour la préparation d'un matériau composite à base de polyacrylonitrile-soufre, comprenant les étapes de procédé :
a) transformation de polyacrylonitrile (1) en polyacrylonitrile cyclisé (2),
b) transformation du polyacrylonitrile cyclisé (2) avec du soufre en un matériau composite à base de polyacrylonitrile-soufre (3).

2. Procédé selon la revendication 1, l'étape de procédé a) ayant lieu dans une atmosphère contenant de l'oxygène, par exemple dans une atmosphère d'air ou d'oxygène.

3. Procédé selon la revendication 1 ou 2, l'étape de procédé a) ayant lieu à une température dans une plage de ≥ 150°C à ≤ 500°C, en particulier de ≥ 150°C à ≤ 330°C ou ≤ 300°C ou ≤ 280°C, par exemple de ≥ 230°C à ≤ 270°C.

4. Procédé selon l'une quelconque des revendications 1 à 3, du soufre élémentaire, par exemple du soufre élémentaire sublimé, étant utilisé dans l'étape de procédé b).

5. Procédé selon l'une quelconque des revendications 1 à 4, le rapport pondéral de soufre à polyacrylonitrile (2) dans l'étape de procédé b) étant ≥ 1:1, en particulier ≥ 1,5:1, par exemple ≥ 2:1, par exemple ≥ 3:1, et/ou ≤ 20:1, en particulier ≤ 15:1 ou ≤ 10:1, par exemple ≤ 5:1 ou ≤ 3:1 ou ≤ 2,5:1 ou ≤ 2:1.

6. Procédé selon l'une quelconque des revendications 1 à 5, l'étape de procédé b) ayant lieu dans une atmosphère de gaz inerte, par exemple dans une atmosphère d'argon ou d'azote.

7. Procédé selon l'une quelconque des revendications 1 à 6, l'étape de procédé b) ayant lieu au moins temporairement en présence d'un catalyseur de vulcanisation ou d'un accélérateur de vulcanisation et/ou d'un inhibiteur de vulcanisation.

8. Procédé selon l'une quelconque des revendications 1 à 7, le procédé comprenant en outre l'étape de procédé c) :
élimination, par exemple extraction, de soufre en excès ou non lié.

9. Matériau composite à base de polyacrylonitrile-soufre, par exemple pour l'utilisation comme matériau cathodique pour une pile métal alcalin-soufre, en particulier pour une pile lithium-soufre, préparé par un procédé selon l'une quelconque des revendications 1 à 8.

10. Matériau composite à base de polyacrylonitrile-soufre, par exemple pour l'utilisation comme matériau cathodique pour une pile métal alcalin-soufre, en particulier pour une pile lithium-soufre,
- le matériau composite à base de polyacrylonitrile-soufre présentant des chaînes polysulfure d'une longueur de chaîne de ≥ 2 ou de ≥ 3 à ≤ 4 atomes de soufre, qui sont reliées des deux côtés, de manière intermoléculaire, par covalence, à deux brins de polyacrylonitrile cyclisés et/ou
- le matériau composite à base de polyacrylonitrile-soufre présentant des chaînes polysulfure d'une longueur de chaîne de ≥ 3 à ≤ 4, par exemple de 3, atomes de soufre, qui sont reliées des deux côtés, de manière intramoléculaire, par covalence, à un brin de polyacrylonitrile cyclisé et/ou
- le matériau composite à base de polyacrylonitrile-soufre présentant, par rapport au nombre total d'atomes de soufre dans le matériau composite à base de polyacrylonitrile-soufre, une proportion d'atomes de soufre liés dans des unités thioamide de ≤ 25 pour cent en atome, en particulier de ≤ 20 pour cent en atome ou de ≤ 15 pour cent en atome, par exemple de ≤ 10 pour cent en atome.

11. Matériau cathodique pour une pile métal alcalin-soufre, en particulier pour une pile lithium-soufre, comprenant un matériau composite à base de polyacrylonitrile-soufre selon la revendication 9 ou 10.

12. Pile ou batterie métal alcalin-soufre, en particulier pile ou batterie lithium-soufre, présentant une anode contenant un métal alcalin, en particulier du lithium et une cathode, et une cathode, la cathode comprenant un matériau cathodique selon la revendication 11.

13. Pile métal alcalin-soufre selon la revendication 12, la pile métal alcalin-soufre comprenant un électrolyte constitué par au moins un solvant électrolytique et au moins un sel conducteur,
- le solvant électrolytique étant choisi dans le groupe constitué par les carbonates cycliques, les carbonates acycliques et des combinaisons de ceux-ci et/ou le sel conducteur étant l'hexafluorophosphate de lithium ou
- le solvant électrolytique étant choisi dans le groupe constitué par les éthers cycliques, les éthers acycliques et des combinaisons de ceux-ci et/ou le sel conducteur étant le bis(trifluorométhylsulfonyl)imide de lithium.

14. Accumulateur d'énergie, en particulier accumulateur d'énergie mobile ou stationnaire, par exemple pour un véhicule, par exemple un véhicule électrique ou hybride, un outil ou un appareil électrique, par exemple un tournevis ou un appareil de jardin, un appareil électronique, par exemple un ordinateur portable et/ou un appareil de télécommunication, tel qu'un téléphone mobile, un PDA ou un système d'accumulation d'énergie élevée pour une maison ou une installation, comprenant une pile ou une batterie métal alcalin-soufre, en particulier une pile ou une batterie lithium-soufre, selon la revendication 12 ou 13.
